# EUROPEAN PATENT APPLICATION

(11) **EP 4 810 542 A1**
(43) Date of publication of application: **23.09.2026**
(21) Application number: 24891035.8
(22) Date of filing: 14.08.2024
(51) Int. Cl.: C08J 3/02, B01D 43/00, F26B 17/28, F26B 25/00

(54) **METHOD FOR CONCENTRATING OR DRYING CELLULOSE NANOFIBER DISPERSION**

(30) Priority: 14.11.2023 JP 2023193874
(71) Applicant: Seiko Kougyo Co., Ltd., Kawasaki-shi, Kanagawa 210-0854 (JP)
(72) Inventor: MATSUO, Kosuke, Yokohama-city, Kanagawa 224-0033 (JP)
(74) Representative: Arnold & Siedsma
(86) International application number: PCT/JP2024/029016
(87) International publication number: WO 2025/104991

(57) **Abstract**

There is provided a method for obtaining a cellulose nanofiber concentrated product or dried product that is capable of producing a redispersion having similar degree of dispersibility as the cellulose nanofiber dispersion before the concentration or drying. A method for concentrating or drying a cellulose nanofiber dispersion includes: a step A of performing a pretreatment of adding the following to the cellulose nanofiber dispersion: (1) The following (1-1) and/or (1-2): (1-1) an alkyl ammonium salt and an amphoteric surfactant, (1-2) ethylene glycol, (2) a mixture of a higher fatty acid or a higher fatty acid amide with isopropyl alcohol; and after the pretreatment, a step of B of supplying the cellulose nanofiber dispersion to a two-roll mill and rotating the two-roll mill to concentrate or dry the cellulose nanofiber dispersion.

## Description

### FIELD OF THE INVENTION

The present invention relates to a method for concentrating or drying a cellulose nanofiber dispersion. In particular, the present invention relates to a method for concentrating or drying a cellulose nanofiber dispersion while suppressing aggregation of the cellulose nanofibers, thereby obtaining a a cellulose nanofiber concentrated product or dried product capable of producing a redispersion liquid having the same degree of dispersibility as the cellulose nanofiber dispersion liquid before the concentration or drying.

### BACKGROUND OF THE INVENTION

Cellulose nanofiber (hereafter also referred to simply as "CNF") is a next-generation material derived from plants, which is said to be five times stronger than steel with one-fifth the weight. The use of cellulose nanofiber in automobiles, home appliances, and other products can reduce their weight and improve their energy efficiency, which is expected to make a significant contribution to combating global warming. In order to promote the social implementation of CNF, the Ministry of Economy, Trade and Industry and the Ministry of Agriculture, Forestry and Fisheries are working together to implement model projects in various sectors, such as automobiles, home appliances, and housing/building materials, to evaluate and verify the effects of CO₂ reduction and to demonstrate solutions to related issues.

As one application example of cellulose nanofibers, Patent Literature 1 (Japanese Patent Application Publication No. 2022-044861) discloses a hot melt adhesive containing cellulose nanofiber fibers, the hot melt adhesive comprising a resin that melts in the range of 70°C to 160 °C and cellulose nanofiber fiber powder. It is disclosed that such hot melt adhesives can instantly solidify the bonded area, have excellent adhesive properties even at low temperatures, and can firmly maintain the bonded surface.

Furthermore, in recent years, cellulose nanofibers have begun to be used widely in water-based paints and are also beginning to be used in cosmetics and food products that incorporate their moisturizing properties. In addition, cellulose nanofiber has a lighter specific gravity than glass, metal, and carbon, and its nano-sized fiber length is expected to improve functions such as increasing the strength of resins, making it an ideal material to add to resin materials as a reinforcing material.

Cellulose nanofibers are generally sold and provided in the form of a dispersion (slurry, sol, or the like) in which they are dispersed in a dispersion medium such as water at a solid content of about 1 to 10% by weight, and the cellulose nanofiber dispersion of a specified concentration produced is usually used for various purposes as an industrial material or an additive material for food and cosmetics. On the other hand, the removal of water is required for the composite formation with hydrophobic materials such as resins and rubbers. Currently, there are several methods for removing water from a dispersion of cellulose nanofibers in water, typically including precipitation, centrifugation, filtration, spray drying, and freeze drying.

For example, Patent Literature 2 (Japanese Patent Application Publication No. 2022-028316) discloses a container for freeze-drying cellulose nanofibers, comprising a main body that stores a brine liquid inside and a jacket that covers the outer periphery of the main body and is supplied with a heat medium, characterized in that the main body is capable of cooling the brine liquid by supplying a heat medium to the jacket. According to Patent Literature 2, a container can be provided that can freeze a cellulose nanofiber dispersion while suppressing aggregation of the cellulose nanofibers.

### PRIOR ART

### Patent Literature

[Patent Literature 1] Japanese Patent Application Publication No. 2022-044861
[Patent Literature 2] Japanese Patent Application Publication No. 2022-028316

### SUMMARY OF THE INVENTION

One of the problems with existing concentration or drying methods is the long time required and low productivity. For example, when drying 500 ml of a 2% aqueous dispersion of cellulose nanofibers, it takes several hours in a thermostatic chamber at around 100 °C, several tens of hours with freeze-drying, and more than an hour with spray-drying even if the spray conditions are good. Even with a centrifugation method, more than 30 minutes are required. If the drying time is long, the molecular structure inside the cellulose nanofiber also changes, which tends to reduce the strength. Therefore, it is better to keep the concentration or drying time as short as possible. Furthermore, when water evaporates or freezes, the large specific surface area of cellulose nanofibers causes strong intermolecular attraction, resulting in strong aggregation, which often makes it impossible to disperse in the next process. Therefore, there is a need for a concentration or drying method for obtaining cellulose nanofibers with excellent redispersibility.

The present invention has been completed in view of the above problems, and in one embodiment, an object of the present invention is to provide a method for obtaining a cellulose nanofiber concentrated product or dried product that is capable of producing a redispersion having similar degree of dispersibility as the cellulose nanofiber dispersion before the concentration or drying.

As a result of extensive research, the present inventors have discovered that the above problems can be solved by a method different from that of the conventional techniques. That is, by subjecting the cellulose nanofiber dispersion to a predetermined pretreatment and then processing it with a two-roll mill, the cellulose nanofiber dispersion can be concentrated or dried in a short time. The obtained cellulose nanofibers have excellent redispersibility, and it is possible to produce a redispersion liquid having the same degree of dispersibility as the cellulose nanofiber dispersion liquid before concentration or drying. The present invention has been completed based on this finding, and is as exemplified below.
[1] A method for concentrating or drying a cellulose nanofiber dispersion, comprising:
   a step A of performing a pretreatment of adding the following to the cellulose nanofiber dispersion:
      (1) The following (1-1) and/or (1-2):
         (1-1) an alkyl ammonium salt and an amphoteric surfactant,
         (1-2) ethylene glycol,
      (2) a mixture of a higher fatty acid or a higher fatty acid amide with isopropyl alcohol; and
   after the pretreatment, a step of B of supplying the cellulose nanofiber dispersion to a two-roll mill and rotating the two-roll mill to concentrate or dry the cellulose nanofiber dispersion.
[2] The method according to [1], comprising heating the surface temperature of the two-roll mill to 170 °C or higher in the step B.
[3] The method according to [1] or [2], wherein the higher fatty acid or higher fatty acid amide comprises 18 to 25 carbon atoms.
[4] The method according to any one of [1] to [3], wherein in the step B, a rotation ratio of a front roll and a rear roll of the two-roll mill is 1 to 3 rpm.

According to one embodiment of the present invention, it is possible to provide a method for obtaining a cellulose nanofiber concentrated product or dried product that is capable of producing a redispersion having similar degree of dispersibility as the cellulose nanofiber dispersion before the concentration or drying.

### BRIEF DESCRIPTION OF THE DRAWINGS

FIG. 1 is a schematic diagram illustrating the structure and operating principle of a two-roll mill in one embodiment of the present invention.
FIG. 2 is an electron microscope photograph of dried products obtained by a drying method according to an embodiment of the present invention and a drying method according to a conventional technology.

### DETAILED DESCRIPTION OF THE INVENTION

Hereinafter, embodiments of the present invention will now be described in detail. It should be understood that the present invention is not intended to be limited to the following embodiments, and any change, improvement or the like of the design may be appropriately added based on ordinary knowledge of those skilled in the art without departing from the spirit of the present invention.

### (1. Cellulose nanofiber dispersion)

Cellulose nanofiber is made by finely grinding cellulose, the main component of plant fiber, into nano-sized particles, and its main raw material is wood pulp (the raw material for paper). The main purpose of its use is to reinforce the resin material and prevent the resin from shrinking at low temperatures. In the present invention, the raw material of the cellulose nanofiber is not particularly limited.

Cellulose nanofibers are usually derived from plants, so when they are extracted from the plant, they are in the form of a slurry dispersed in water. The solid content is usually 1 to 10% by weight. For example, when the purpose is to disperse cellulose nanofibers in a hydrophobic resin for use, it is first necessary to remove only the water from the aqueous dispersion of cellulose nanofibers dispersed in water, thereby extracting the cellulose nanofibers as simple substances. In addition, it is also possible that cellulose nanofibers may be re-extracted from a re-dispersion liquid in which cellulose nanofibers are re-dispersed in water or a dispersion medium other than water. Therefore, in the present invention, the dispersion medium in the cellulose nanofiber dispersion is not limited to water, although the dispersion medium in the cellulose nanofiber dispersion is preferably water. In addition, as mentioned above, the solids content in the cellulose nanofiber dispersion is usually 1 to 10% by weight, but may be further diluted to less than 1% by weight. Therefore, the cellulose nanofiber dispersion can be preliminarily dried before the pretreatment described below. The method of pre-drying is not particularly limited, and any conventional method can be used. The cellulose nanofiber dispersion can be pre-dried, for example, to a maximum solid content of 12% by weight, and then the concentration or drying method of the present invention can be carried out. The cellulose nanofiber dispersion is dried to obtain a cellulose nanofiber powder. The cellulose nanofiber powder preferably has an average fiber length of 0.1 µm or more. This is expected to have a reinforcing effect. From this perspective, it is more preferable that the average fiber length of the cellulose nanofiber powder is 0.2 µm or more, even more preferable that it is 0.3 µm or more, and even more preferable that it is 0.5 µm or more. When the average fiber length of the cellulose nanofiber powder is 0.1 µm or more, it has a high aspect ratio relative to the average fiber diameter.

In addition, it is preferable that the average fiber length of the cellulose nanofiber powder is 3.0 µm or less, which can prevent the cellulose nanofibers from becoming rounded into a spherical shape during processing. From this viewpoint, the average fiber length of the cellulose nanofiber powder is more preferably 2.5 µm or less, even more preferably 1.5 µm or less, and even more preferably 1.0 µm or less.

It should be noted that the average fiber length of the cellulose nanofiber powder refers to the D50 (median diameter) of the fibers of the cellulose nanofiber powder measured in accordance with the laser diffraction/scattering method of JIS Z8825: 2022.

The average fiber diameter of the cellulose nanofiber powder is preferably 0.5 nm or more. This is expected to have a reinforcing effect. From this viewpoint, the average fiber diameter of the cellulose nanofiber powder is more preferably 0.7 nm or more, even more preferably 1 nm or more, and even more preferably 3 nm or more.

In addition, the average fiber diameter of the cellulose nanofiber powder is preferably 10 nm or less, which can prevent the cellulose nanofibers from becoming too thick, lowering the aspect ratio and causing a loss of orientation when diffusing in the molten resin. From this viewpoint, the average fiber diameter of the cellulose nanofiber powder is more preferably 8 nm or less, even more preferably 7 nm or less, and even more preferably 5 nm or less.

It should be noted that the average fiber diameter of the cellulose nanofiber powder refers to the average particle diameter of the fibers of the cellulose nanofiber powder measured in accordance with the dynamic light scattering method of JIS Z8828: 2019.

### (2. Pretreatment of cellulose nanofiber dispersion)

In one embodiment of the present invention, in order to concentrate or dry the cellulose nanofiber dispersion, treatment with a two-roll mill is carried out as described below. Here, before the treatment with the two-roll mill, a pretreatment is required, the purpose of which is to lower the boiling point of the dispersion medium (hereinafter, water will be used as an example) and to impart heat resistance and hydrophilicity or lipophilicity to facilitate subsequent use.

Although there is no intention to restrict the present invention to any theory, it is believed that by lowering the boiling point of water, the explosive vaporization of water vapor is enhanced, making it difficult for the cellulose nanofibers to form aggregates. Furthermore, by imparting hydrophilic or lipophilic properties (collectively referred to as "wettability".) to cellulose nanofibers, it is possible to create concentrated products or dried products for specific applications after concentration or drying that are suited to the desired water-based, solvent-based, thermoplastic resin-based, or thermosetting resin-based systems. In other words, additives added later will be more easily adsorbed onto the cellulose nanofibers.

Specifically, the pretreatment step involves adding (1-1) an alkyl ammonium salt and an amphoteric surfactant, and/or (1-2) ethylene glycol; and (2) a mixture of a higher fatty acid or a higher fatty acid amide with isopropyl alcohol (IPA) to a dispersion of cellulose nanofibers (step A). This lowers the boiling point of water, which is the medium for the aqueous dispersion of cellulose nanofibers, and also imparts heat resistance and improves wettability when added later to create concentrated or dried CNF for specific uses.

Examples of alkyl ammonium salts include, but are not limited to, distearyl dimethyl ammonium chloride, behenyl trimethyl ammonium chloride solution, stearyl trimethyl ammonium chloride, cetyl trimethyl ammonium chloride water, lauryl trimethyl ammonium chloride, benzalkonium chloride, and the like. These are usually added in the form of an aqueous solution. Alkyl ammonium salts have the effect of preventing the aggregation of cellulose nanofibers as the water content decreases.

The amount of alkylammonium salt added is not particularly limited, but it is preferable to add the alkylammonium salt in an amount of 0.01 to 0.50% by weight with respect to the total weight of the cellulose nanofiber dispersion.

The amphoteric surfactant remains on the surface of the cellulose nanofiber after drying, and serves to bond well with the surfactant in the next process. Examples of amphoteric surfactants include, but are not limited to: amino acid glycine type including sodium cocoamphoacetate, sodium lauroamphoacetate, and disodium cocoamphodiacetate; betaine type including amino acetate betaine type cocamidopropyl betaine, lauramidopropyl betaine, myristamidopropyl betaine, palm kernel fatty acid amidopropyl betaine, lauryl betaine, cocobetaine, sulfobetaine type lauryl hydroxysultaine, lauramidopropyl hydroxysultaine, and cocamidopropyl hydroxysultaine; amine oxide type including amine oxide type lauramine oxide, amidoamine oxide type lauramidopropylamine oxide, and the like.

The amount of amphoteric surfactant added is not particularly limited, but it is preferable that the amphoteric surfactant be added in an amount of 0.10 to 0.30% by weight with respect to the total weight of the cellulose nanofiber dispersion.

Further, it is also possible to add ethylene glycol in place of or in addition to the alkyl ammonium salt and amphoteric surfactant. Although ethylene glycol and cellulose nanofibers do not chemically bond, ethylene glycol has a high adsorption property to plant-based fibers and has a wetting effect on cellulose nanofibers. This makes it less likely for re-aggregation to occur when the water evaporates, and because ethylene glycol has both hydrophilic and hydrophobic properties, it plays a role in bonding well with the surfactant in the next process.

The amount of ethylene glycol added is not particularly limited, but it is preferable to add 0.02 to 0.30% by weight of ethylene glycol with respect to the total weight of the cellulose nanofiber dispersion. In addition , ethylene glycol is usually added in the form of an aqueous solution, but it may also be added as a single substance.

The mixture of higher fatty acids and isopropyl alcohol (IPA) is impregnated into the fibers of cellulose nanofibers, allowing them to withstand the heating and drying temperatures (170 °C or higher) used in a two-roll mill. As used herein, a higher fatty acid refers to a fatty acid having from 18 to 25 carbon atoms, which may be saturated or unsaturated, and may be linear, branched or otherwise. For example, among higher fatty acids, the general chemical formula of carboxylic acid is R-COOH (R represents a substituent of the carboxylic acid), and the chemical formula of isopropyl alcohol is C₃H₈O. The reaction formula for a mixture of the two is R-COOH + C₃H₈O → R-COOC₃H₇+H₂O. That is, a higher fatty acid reacts with isopropyl alcohol to produce a fatty acid ester (R-COOC₃H₇) and water (H₂O).

Preferably, the mixture comprises a higher fatty acid amide. As used herein, a higher fatty acid amide contains from 18 to 25 carbon atoms and may be saturated or unsaturated, linear or branched or otherwise. The reaction formula of a mixture of a higher fatty acid or a higher fatty acid amide and IPA is expressed as follows.

R-CONH₂ +R'-COOH+C₃ H₈ O→R-CONH-R'-COOC₃ H₇ +H₂ O

In which, "R" represents a substituent of a higher fatty acid, and "R'" represents a substituent of a higher fatty acid amide. It reacts with isopropyl alcohol to produce an amide ester (R-CONH-R'-COOC₃H₇) and water (H₂O). Amide esters are compounds formed by the reaction of higher fatty acids with higher fatty acid amides, and have heat resistance of 270 °C or higher. As a result, by impregnating the amide ester into the fibers of cellulose nanofibers, the fibers can withstand heating and drying temperatures using rolls of 170 °C or higher.

The higher fatty acid or higher fatty acid amide also melt in the treatment with the two-roll mill described below, producing a wax-like effect. That is, the concentrated or dried cellulose nanofibers have improved releasability from the roll plating surface or roll metal surface and will peel off naturally.

The amount of the mixture of higher fatty acid or higher fatty acid amide with isopropyl alcohol (IPA) added is not particularly limited, but it is preferable that the higher fatty acid or higher fatty acid amide is added at 0.20 to 0.80% by weight and the IPA is added at 2.5 to 15.0% by weight with respect to the total weight of the cellulose nanofiber dispersion. In addition, in order to ensure that the reaction according to the above-mentioned reaction formula is carried out sufficiently, these additives are not added separately to the aqueous dispersion of cellulose nanofibers, but are mixed in advance and added in the form of a mixture.

After adding each of the above additives to the aqueous dispersion of cellulose nanofibers, it is preferable to stir the mixture to mix them together. During the stirring of the pretreatment, it is desirable for the cellulose nanofibers to be kneaded in a spiral manner while maintaining their orientation in the liquid or sol. The stirring method and device are not particularly limited, but a Super Mixer (manufactured by Kawata MFG Co., Ltd.), a Henschel Mixer (manufactured by Nippon Coke and Engineering Co., Ltd.), a High Speed Mixer (manufactured by EARTHTECHNICA Co., Ltd.), or the like can be suitably used.

### (3. Treatment with a two-roll mill)

After the pretreatment, the cellulose nanofiber dispersion is supplied to a two-roll mill, and the two-roll mill is rotated to remove the aqueous dispersion of cellulose nanofibers and obtain concentrated or dried cellulose nanofibers (step B). If the boiling point of water is lowered by pretreatment, a sufficient concentration or drying effect can be obtained after the raw material (cellulose nanofiber dispersion) is added, even if the temperature of the two-roll mill is lowered to a certain extent. However, from the viewpoint of promoting the evaporation of water, it is preferable to heat the two-roll mill to a certain temperature or higher.

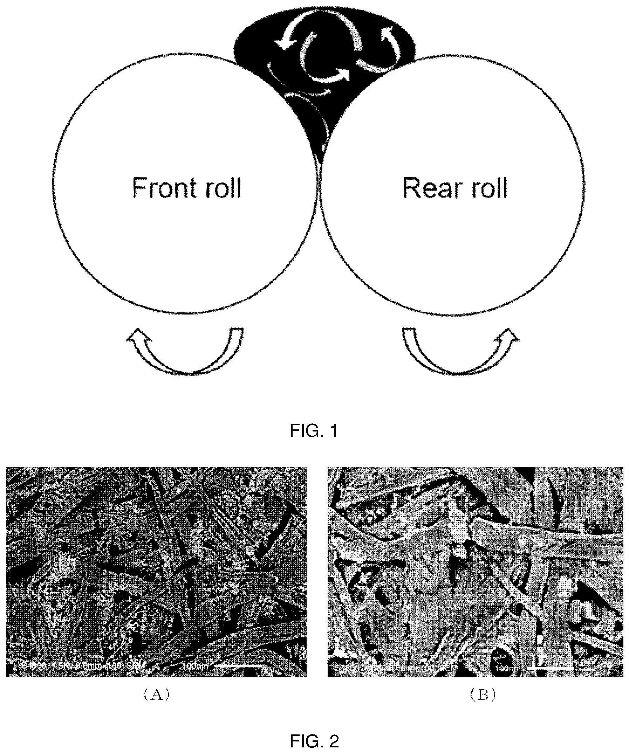

By supplying an aqueous dispersion of cellulose nanofibers to the middle of a two-roll mill, the aqueous dispersion of cellulose nanofibers is absorbed into the gap (nip) between the rolls (FIG. 1). A characteristic of two-roll mills is that the material rotates in the same direction as the rolls in a roll bank above the nip before entering the nip. At this time, the cellulose nanofibers retain their orientation, and the fibers enter the nip lined up in the same direction. This causes shear stress in the nip while maintaining the orientation of the cellulose nanofibers. The raw materials have a lower boiling point due to self-heating caused by shear and the heating temperature of the two-roll mill, so they vaporize easily, shortening the time required for concentration or drying. The distance (clearance) between the rolls is not particularly limited, but in this embodiment, it is preferably 0.3 to 1.5 mm.

The greater the rotation ratio (that is, the difference in rotation speed rpm) between the front roll and the rear roll in the two-roll mill is, the faster the dispersion is absorbed into the nip. On the other hand, if the rotation ratio between the front roll and the rear roll is too large, the shear generated by the rotation ratio becomes small and the time required for water to evaporate becomes short. Therefore, the rotation ratio is preferably set to 1 to 3. Furthermore, if there is no rotation ratio, the aqueous dispersion of cellulose nanofibers cannot penetrate into the nip and tends to stagnate on the roll bank.

Self-heating in the nip and heat transfer from the heated two-roll mill causes the water molecules to attract each other while in liquid form and interact with other nearby molecules due to the intermolecular forces of attraction and thermal energy of the water. The sudden high temperature gives the water molecules enough energy to overcome the intermolecular forces of attraction between the water and the fiber, and the water and alcohol instantly transition from a liquid to a gas. The phenomenon of a steam explosion occurs when rapidly moving molecules change from a liquid to a gas. Here, the alkyl ammonium salts and amphoteric surfactants used as pretreatment additives can withstand high temperatures up to 200 °C, and higher fatty acids can withstand temperatures up to 270 °C, and therefore, this allows the cellulose nanofibers to withstand the energy of a steam explosion, and when they pass through the nip, they turn into a thin powder film without burning, even in the absence of moisture. As mentioned above, the cellulose nanofibers is adsorbed into the nip while retaining their orientation, so they undergo vaporization by steam explosion in the same direction, resulting in little random stress on the cellulose nanofibers and making it possible to concentrate or dry them in a state close to their original form (a state in which the double helix structure is barely unraveled).

Here, other possible kneading machines besides the two-roll mill include a pressure kneader, Banbury mill, and extruder. However, since these involve random kneading, the cellulose nanofibers tend to become entangled and form lumps even if the water is evaporated instantly. Furthermore, conventional techniques such as freeze-drying, drying ovens, and spray drying do not provide a means for imparting orientation to cellulose nanofibers, and because drying takes time, the double helix structure tends to loosen and lumps tend to form. Therefore, the treatment using a two-roll mill has advantages that cannot be obtained by the conventional techniques. It should be noted that the two-roll mill may be any device that is capable of kneading the raw material between two rolls, and may have a third or subsequent rolls.

In order to promote the evaporation of water, it is preferable to heat the surface temperature of the two-roll mill to 170 °C or higher. By heating the surface temperature of the two-roll mill to 170 °C or higher, water can be boiled and evaporated rapidly, and the treatment can be completed in a short period of time. Typically, a concentrated product or dried product can be obtained within three revolutions of the two-roll mill (within 30 seconds), and the moisture content of the concentrated or dried product can be 1000 ppm by mass or less. From this viewpoint, the surface temperature of the two-roll mill is more preferably 173 °C or higher, and further preferably 175 °C or higher.

On the other hand, if the surface temperature of the two-roll mill is too high, there is a risk of the cellulose nanofibers being altered, so it is preferably set to 190 °C or less, and more preferably to 180 °C or less. Therefore, in one embodiment of the present invention, the surface temperature of the two-roll mill is 170 °C to 180 °C.

As a result of the above-mentioned processing by the two-roll mill, a concentrated or dried product of cellulose nanofibers is obtained. When a dried product is obtained, the following appearance and properties are typically obtained.
- Shape: Plate-like flakes with sizes between 1mm and 5mm and a thickness of 0.5mm or less.
- Color: Milky white and transparent.
- Although hard, it can be easily broken into a fine powder with fingertips. No special crushing process is required.
- There is no yellowing or partial discoloration.
- There is almost no scattering into the air even when weighed and packaged.

Furthermore, since fatty acids and amphoteric surfactants are attached to the surface of the cellulose nanofiber after moisture has been removed, it is less likely to burn. In particular, the adhesion of higher fatty acid or higher fatty acid amide provides high heat resistance. Furthermore, in the two-roll mill, the supply of raw materials and the recovery of concentrated or dried products can be carried out continuously, which is advantageous in terms of high productivity.

### EXAMPLES

Hereinafter, examples of the present invention will be described below together with comparative examples. It should be noted that these Examples are provided for a better understanding of the present invention and its advantages, and are not intended to limit the invention.

### Test 1: Comparison of the performance of dried products with different formulations

Additives of the types and amounts shown in Table 1 were added to a cellulose nanofiber dispersion having a solid content of 2% by weight, and the mixture was stirred and mixed using a Henschel mixer (high-speed type) manufactured by Nippon Coke and Engineering Co., Ltd. The cellulose nanofiber dispersion after addition was placed in a two-roll mill manufactured by YASUDA SEIKI SEISAKUSHO, LTD. (roll diameter: 8 inches; surface treatment: gloss plating; nip clearance: 0.5 mm). The amount of the material charged was 300 g.

The roll was heated to a surface temperature of 170 °C. Next, the two-roll mill was operated so that the rotation speed of the front roll was 7 rpm and the rotation speed of the rear roll was 6 rpm, and a sample of the dried product was taken after three rotations of the front roll. The time required for drying was within 30 seconds.

**Table 1-1**

| Formulation (parts by weight) | | Test Example 1-1 | Test Example 1-2 | Test Example 1-3 | Test Example 1-4 | Test Example 1-5 |
|---|---|---|---|---|---|---|
| CNF water dispersion | Water | 88.77 | 88.95 | 89.22 | 97.38 | 88.95 |
| | CNF | 1.81 | 1.81 | 1.81 | 1.81 | 1.81 |
| Alkyl ammonium salt | BYK-9076 | 0.10 | 0.10 | 0.10 | 0.10 | - |
| | BYK-185 | 0.08 | 0.08 | 0.08 | 0.08 | - |
| Amphoteric surfactant | Softazoline LPB-R | 0.18 | - | 0.18 | 0.18 | 0.18 |
| Mixture of higher fatty acid amide and IPA | Neutron | 0.45 | 0.45 | - | 0.45 | 0.45 |
| | IPA | 8.61 | 8.61 | 8.61 | - | 8.61 |
| | Total | 100.00 | 100.00 | 100.00 | 100.00 | 100.00 |

| Performance evaluation | | | | | | |
|---|---|---|---|---|---|---|
| Water content (% by weight) | | 0.01 | 0.01 | 0.12 | 21.2 | 24.9 |
| Evaluation of peeling from roll | | Almost complete peeling | Almost complete peeling | No peeling | No peeling | Almost complete peeling |
| Redispersibility (number of pinholes) | | 0 | No less than10 | 8 | No less than10 | No less than10 |

**Table 1-2**

| | | Test Example 2-1 | Test Example 2-2 | Test Example 2-3 | Test Example 2-4 | Test Example 2-5 |
|---|---|---|---|---|---|---|
| CNF water dispersion | Water | 89.13 | 88.95 | 89.22 | 97.38 | 88.95 |
| | CNF | 1.81 | 1.81 | 1.81 | 1.81 | 1.81 |
| Alkyl ammonium salt | BYK-9076 | - | 0.10 | 0.10 | 0.10 | - |
| | BYK-185 | - | 0.08 | 0.08 | 0.08 | - |
| Amphoteric surfactant | Softazoline LPB-R | - | - | 0.18 | 0.18 | 0.18 |
| Ethylene glycol | 1,2-Ethanediol | 0.10 | 0.10 | 0.10 | 0.00 | 0.10 |
| Mixture of higher fatty acid amide and IPA | Neutron | 0.45 | 0.45 | - | 0.45 | 0.45 |
| | IPA | 8.51 | 8.51 | 8.51 | 0.00 | 8.51 |
| | Total | 100.00 | 100.00 | 100.00 | 100.00 | 100.00 |

| Performance evaluation | | | | | | |
|---|---|---|---|---|---|---|
| Water content (% by weight) | | 0.01 | 0.01 | 0.18 | 22.9 | 21.1 |
| Evaluation of peeling from roll | | Almost complete peeling | Almost complete peeling | No peeling | No peeling | Almost complete peeling |
| Redispersibility (number of pinholes) | | No more than 3 | No less than10 | No less than10 | No less than10 | No less than10 |

In addition, the details of each compound shown in Table 1 are as follows.BYK-9076: Wetting and dispersing agent manufactured by BYK. It is a 50 to 60% by mass solution of alkylammonium salt of a high molecular weight copolymer.

BYK-185: Wetting and dispersing agent manufactured by BYK. It is a 60 to 70% by mass solution of alkyl ammonium salt.

Softazoline (registered trademark) LPB-R: Amidobetaine type amphoteric surfactant manufactured by Kawaken Fine Chemicals Co., Ltd. It is a lauryl amidopropyl betaine solution.

Neutron: Oleic acid amide manufactured by Nippon Fine Chemical Co., Ltd. The chemical formula is C₁₇H₃₃CONH₂.

### (Performance evaluation)

The moisture content of the obtained dried product was measured according to the Karl Fischer measurement method. Specifically, the dried product sample was titrated with a Karl Fischer reagent containing sulfur dioxide and a base as main components using a Karl Fischer moisture meter (model number: MKH-710) manufactured by Kyoto Electronics Manufacturing Co., Ltd., and the moisture content of the dried product sample was calculated from the volume of the reagent consumed (volumetric titration method). The results are shown in Table 1.

Further after three revolutions of the front roll, it was visually confirmed whether the dried product was easily peeled off from the rolls of the two-roll mill. The results are shown in Table 1.

Further, for each Test Example, a dried product was collected and placed in a hot mixing two-roll mill (two rolls) heated to 195 °C so that the weight ratio of polypropylene resin to dried product was 100:1, and kneaded for 5 minutes with a clearance of 1 mm to form a resin film with a thickness of 25 µm. The resin film was cut to A4 size and visually inspected for the presence or absence of pinholes. The results are shown in Table 1.

As can be seen from Table 1, in Test Example 1-3 in which no higher fatty acid amide was added and Test Example 1-4 in which no IPA was added, water was not sufficiently evaporated and a large amount of water remained. Furthermore, the dried product did not peel off from the roll, and some parts were stuck together and yellowed. It was also confirmed that when any of the compounds necessary for the pretreatment was absent, the resin film formed had a large number of pinholes and was poor in redispersibility.

### Test 2: Comparison of moisture content of dried products depending on roll temperature

The same types and amounts of additives as in Test Example 1-1 were added to a cellulose nanofiber dispersion having a solid content of 2% by weight, and the mixture was stirred and mixed using a Henschel mixer (high-speed type) manufactured by Nippon Coke and Engineering Co., Ltd. The cellulose nanofiber dispersion after addition was placed in a two-roll mill manufactured by YASUDA SEIKI SEISAKUSHO, LTD. (roll diameter: 8 inches; surface treatment: gloss plating; nip clearance: 0.5 mm). The amount of the material charged was 300 g. The surface temperature of the roll was heated as shown in Table 2. Next, the two-roll mill was operated so that the rotation speed of the front roll was 7 rpm and the rotation speed of the rear roll was 6 rpm, and a sample of the dried product was taken after three rotations of the front roll. The moisture content of the collected samples was evaluated according to the method described above, and the results are shown in Table 2.

**Table 2**

| | | | | | | | | | | |
|---|---|---|---|---|---|---|---|---|---|---|
| Roll temperature (°C) | 30 | 50 | 70 | 90 | 110 | 130 | 150 | 170 | 190 | 210 |
| Water content (% by weight) | 87 | 61 | 18 | 11 | 9 | 7 | 3 | 0 | 0 | 0 |

As can be seen from Table 2, when the surface temperature of the roll was 170 °C or higher, the moisture content of the obtained dried product was reduced to an undetectable level. In addition, when a cellulose nanofiber dispersion with a solid content of 2% by weight was tested by adding the same types and amounts of additives as in Test Example 2-1 above, almost the same results as in Table 2 above were obtained.

### Test 3: Comparison of properties of dried products using different drying methods

The same types and amounts of additives as in Test Example 1-1 were added to a cellulose nanofiber dispersion having a solid content of 2% by weight, and the mixture was stirred and mixed using a Henschel mixer (high-speed type) manufactured by Nippon Coke and Engineering Co., Ltd. After the addition, 5 L of the cellulose nanofiber dispersion was taken and placed in a vacuum freeze-drying device SF-5 manufactured by Sansho Industry Co., Ltd., and vacuum freeze-dried for 8 hours by continuous operation at -37 °C. 3 g of the dried product was sampled and observed using a field emission scanning electron microscope S-4800 manufactured by Hitachi High-Tech Corporation, and a photograph was taken at 8000 times magnification (FIG. 2B). Looking at the photograph, aggregates and CNF fragments can be confirmed.

On the other hand, an electron microscope photograph was taken under the same conditions for the dried product of Test Example 1-1 (FIG. 2A). It can be seen that both the cellulose nanofibers and the dispersant are well dispersed in the dried product of Test Example 1-1. In other words, the dried product obtained by treatment with the two-roll mill can produce a redispersion liquid having the same degree of dispersibility as the CNF dispersion liquid before drying.

## Claims

1. A method for concentrating or drying a cellulose nanofiber dispersion, comprising:
a step A of performing a pretreatment of adding the following to the cellulose nanofiber dispersion:
(1) The following (1-1) and/or (1-2):
(1-1) an alkyl ammonium salt and an amphoteric surfactant,
(1-2) ethylene glycol,
(2) a mixture of a higher fatty acid or a higher fatty acid amide with isopropyl alcohol; and
after the pretreatment, a step of B of supplying the cellulose nanofiber dispersion to a two-roll mill and rotating the two-roll mill to concentrate or dry the cellulose nanofiber dispersion.

2. The method according to claim 1, comprising heating the surface temperature of the two-roll mill to 170 °C or higher in the step B.

3. The method according to claim 1 or 2, wherein the higher fatty acid or higher fatty acid amide comprises 18 to 25 carbon atoms.

4. The method according to claim 1 or 2, wherein in the step B, a rotation ratio of a front roll and a rear roll of the two-roll mill is 1 to 3 rpm.
